(19) Europäisches Patentamt
European Patent Office
Office européen des brevets

(11) **EP 4 764 592 A1**

(12) **EUROPEAN PATENT APPLICATION**

(43) Date of publication:
24.06.2026 Bulletin 2026/26

(21) Application number: 24222856.7

(22) Date of filing: 23.12.2024

(51) International Patent Classification (IPC):
**G01S 7/285** *(2006.01)*      **G01S 7/292** *(2006.01)*
**G01S 13/58** *(2006.01)*      G01S 7/41 *(2006.01)*
**G01S 7/03** *(2006.01)*

(52) Cooperative Patent Classification (CPC):
**G01S 7/292; G01S 7/285; G01S 7/415;
G01S 13/582;** G01S 7/038; G01S 7/414

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: NXP B.V.
5656 AG Eindhoven (NL)

(72) Inventors:
• MYERS, Nitin Jonathan
5656AG Eindhoven (NL)

• SHAIKH, Mohammed Aasin Mohamedamin
5656AG Eindhoven (NL)
• PANDHARIPANDE, Ashish
5656AG Eindhoven (NL)
• JOSEPH, GEETHU
5656AG Eindhoven (NL)

(74) Representative: Schwarzweller, Thomas
NXP Semiconductors Germany GmbH
Intellectual Property Group
Beiersdorfstraße 12
22529 Hamburg (DE)

Remarks:
Claims filed after the date of filing of the application
(Rule 68(4) EPC).

(54) **RECEIVER DESIGN FOR DYNAMIC RANGE ENHANCEMENT IN RADAR SYSTEMS**

(57) Embodiments of radar devices and methods include receiver circuits configured to receive reflected radio frequency (RF) signals reflected by one or more objects in a view area. Each receiver circuit (128) is configured to, for a first reflected RF signal, quantize the first reflected RF signal using an analog-to-digital converter, ADC (130) having a first resolution to produce a digital signal; and for subsequent reflected RF signals, cancel object information corresponding to one or more stationary or moving objects with known Doppler information in the view area from the subsequent RF signals based on the digital signal and prior Doppler information to produce filtered RF signals including moving object information; adjust the ADC to have a second resolution that is less than the first resolution; and determine radar cross-section data for one or more other moving objects within the view area using the ADC measurements at the second resolution.

FIG. 1

EP 4 764 592 A1

**Description**

FIELD OF USE

The present disclosure generally relates to radar systems, such as automotive radar systems, and more particularly to receiver methods and designs for dynamic range enhancement.

BACKGROUND

The use of high-resolution analog-to-digital converters (ADCs) in automotive radar receiver circuits may result in a substantial power consumption at high sampling rates. To reduce this power consumption, low-resolution ADCs may be employed at the radar receiver. However, automotive radar receiver circuits using low-resolution ADCs may suffer from a low dynamic range (LDR) problem at least in part because the quantized signal is primarily determined by analog signals of high-strength, making low-power analog signals harder to detect. As a result, high radar cross-section (RCS) objects may obscure low RCS objects in low-resolution radar receiver circuits. Furthermore, the RCS of the objects can only be estimated up to a global scale factor in the extreme case of one-bit quantization. Due to both these issues, the low-resolution radar's overall performance and reliability may pose safety risks in automotive applications.

BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures and in the detailed description indicates similar or identical items or features.

FIG. 1 depicts a diagram of a system including radar system configured to use prior Doppler information to produce an analog cancellation signal that can be applied prior to quantization to enhance the dynamic range, in accordance with certain embodiments.

FIG. 2 depicts a diagram of a system including a radar device configured to use transmit beamforming so that the radar system illuminates a selected direction with a sequence of pulses, in accordance with certain embodiments.

FIG. 3 depicts a simplified view of a portion of a receiver module of the radar system of FIG. 1 configured to produce an analog cancellation signal that can be applied prior to quantization to enhance the dynamic range, in accordance with certain embodiments.

FIG. 4 depicts a diagram of a method of processing received radar signals including analog-to-digital converter (ADC) resolution configured to enhance the dynamic range of the receiver module, in accordance with certain embodiments.

FIG. 5A depicts a graph of range bins versus Doppler bins for a true range system and the receiver module of FIGs. 1-4 with Doppler cancellation, in accordance with certain embodiments.

FIG. 5B depicts a graph of range bins versus Doppler bins for a true range system and a conventional low-dynamic range receiver module.

FIG. 6A depicts a graph of the probability of detection for a moving object with respect to signal-to-noise ratio for a low dynamic range system and for the receiver module with Doppler cancellation of FIGs. 1-4, in accordance with certain embodiments.

FIG. 6B depicts a graph of the probability of detection versus an absolute radar cross-section (RCS) of a static object for a low dynamic range system and for the receiver module with Doppler cancellation of FIGs. 1-4, in accordance with certain embodiments.

FIG. 7A depicts a graph of a graph of the probability of detection versus the object velocity for a low dynamic range system and for the receiver module with Doppler cancellation of FIGs. 1-4, in accordance with certain embodiments.

FIG. 7B depicts a graph of the normalized mean square error (NMSE) versus object velocity for a low dynamic range system and for the receiver module with Doppler cancellation of FIGs. 1-4, in accordance with certain embodiments.

FIG. 8A depicts a graph of the normalized mean square error (NMSE) with respect to signal-to-noise ratio (SNR) in decibels for a low dynamic range system and for the receiver module with Doppler cancellation of FIGs. 1-4, in accordance with certain embodiments.

FIG. 8B depicts a graph of the normalized mean square error (NMSE) versus the absolute RCS of a static object for a low dynamic range system and for the receiver module with Doppler cancellation of FIGs. 1-4, in accordance with certain embodiments.

FIG. 9 depicts a flow diagram of a method of determining objects in a view area of a radar system, in accordance with certain embodiments.

FIG. 10 depicts a flow diagram of a method of enhancing a dynamic range of a receiver using a cancellation signal based on prior Doppler information, in accordance with certain embodiments.

While implementations are described in this disclosure by way of example, those skilled in the art will recognize that the implementations are not limited to the examples or figures described. Rather, the figures and detailed description thereto are not intended to limit implementations to the form disclosed, but instead the intention is to cover all modifications, equivalents, and alternatives falling within the spirit and scope as defined by the appended claims. The headings used in this disclosure are for organizational purposes only and are not meant to limit the scope of the description or the claims. As used throughout this application, the word "may" is used in a permissive sense (in other words, the term "may" is intended to mean "having the potential to") instead of in a mandatory sense (as in "must"). Similarly, the terms "include," "including," and "includes" mean "including, but not limited to."

DETAILED DESCRIPTION

Embodiments of radar devices and methods may include one or more receiver circuits configured to receive reflected radio frequency (RF) signals reflected by one or more objects in a view area. Each receiver circuit is configured to, for a first RF signal of the reflected RF signals, downconvert and quantize the first RF signal using an analog-to-digital (ADC) converter having a first resolution to produce a digital signal; and for subsequent RF signals of the reflected RF signals, cancel object information corresponding to one or more stationary objects in the view area from the subsequent RF signals based on the digital signal and prior Doppler information to produce filtered RF signals including moving object information; adjust the ADC to have a second resolution that is less than the first resolution; and quantize the filtered RF signals using the ADC to determine range, Doppler, and radar cross-section (RCS) data for one or more moving objects.

In one or more embodiments, a radar system is described that includes one or more transmitter modules 118 configured to transmit radar signals toward a view area and that includes one or more receiver modules 128 configured to receive reflected signals indicative of objects in the view area. To disambiguate between stationary objects (such as traffic signs, traffic signals, fire hydrants, buildings, and so on) that may have a large radar cross-section relative to one or more moving objects (such as a pedestrian, a car, and so on), the receiver module 128 may use prior Doppler information of the view area to generate a Doppler cancellation signal, which may be used to remove (cancel) stationary object information from the received reflected signals to produce filtered signals. The receiver module 128 may determine range-Doppler information for one or more moving objects within the view area from the filtered signals and then may determine range-Doppler information for stationary objects. In one or more embodiments, the Doppler cancellation signal may be applied prior to quantization, thereby enhancing the dynamic range of the radar system. In one or more embodiments, the radar system may be used to enhance the radar's dynamic range even when the high RCS object may be moving, provided the Doppler information of the high RCS object is known. The radar system may adapt the resolution of the ADCs 130 in slow-time and may enable the system to resolve scale factor ambiguity in RCS estimation with one-bit radars.

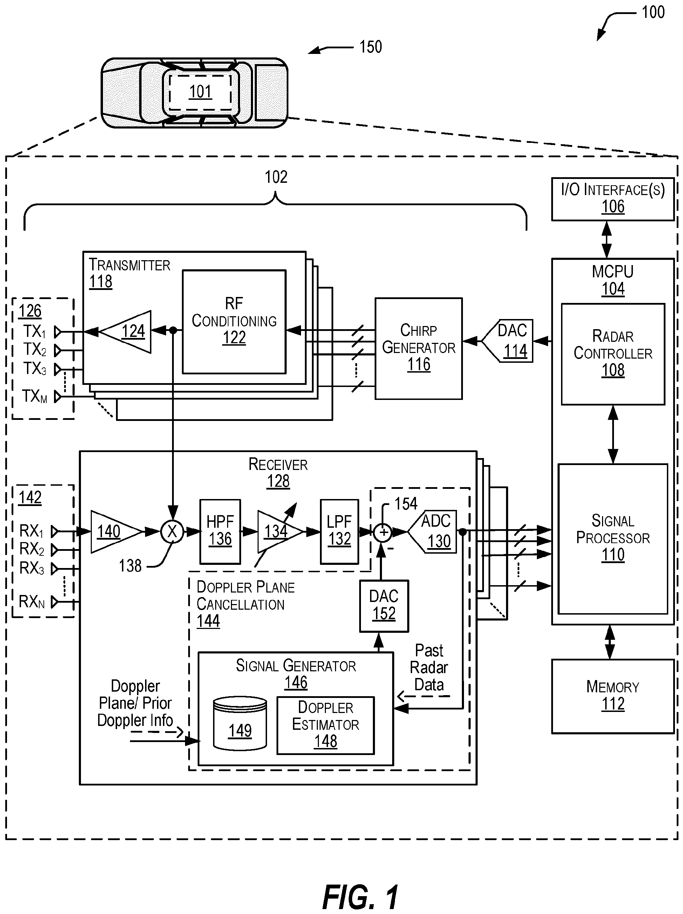

FIG. 1 depicts a diagram of a radar system 100 configured to use prior Doppler information to produce an analog cancellation signal that can be applied prior to quantization to enhance the dynamic range, in accordance with certain embodiments. The radar device 102 (sometimes referred to herein as "radar communication circuitry 102" or "radar front-end circuitry 102") may be coupled to a radar microcontroller and processing unit (MCPU) 104, which may be configured to control operation of various components of the radar system 100. In one or more embodiments, the radar system 100 may be a Multiple-Input Multiple-Output (MIMO) radar system, such as a Linear Frequency Modulation (LFM) MIMO radar system (e.g., an LFM automotive MIMO radar system). In one or more embodiments, the radar device 102 may include radar front-end hardware. In one or more embodiments, the radar device 102 may be embodied as a line-replaceable unit (LRU) or modular component that is designed to be replaced quickly at an operating location. Similarly, the radar MCPU 104 may be embodied as a line-replaceable unit (LRU) or modular component. Although single or mono-static radar devices are shown, it will be appreciated that additional distributed radar devices may be used to form a distributed or multi-static radar. In addition, the depicted radar system 100 may be implemented in integrated circuit form with the radar device 102 and the radar MCPU 104 formed on separate integrated circuits (chips) or on a single chip, depending on the application.

In accordance with one or more embodiments, the radar system 100 may be implemented as part of an automotive system in conjunction with an Advanced Driver Assistance System (ADAS) of a vehicle, such as a vehicle 150. The vehicle 150 may include circuitry 101, which may include the radar device 102 and the MCPU 104, the one or more I/O interfaces 106, and the memory 112. It should be understood that components of the radar system 100 may be distributed at various locations on or within the vehicle 150 (e.g., with antennas located at one or more front, rear, or side panels of the vehicle 150, at front or rear bumpers of the vehicle 150, or at other suitable locations on the vehicle 150, or at a combination of such locations; with processing circuitry, transmitter modules 118, and receiver modules 128 being disposed at one or more locations inside the vehicle 150). It should be understood that each of the transmitter modules 118 and the receiver modules 128 may be implemented as one or more circuits.

The radar device 102 may include one or more transmitting antenna elements 126 (sometimes referred to herein as "transmit antennas 126") and receiving antenna elements 142 (sometimes referred to herein as "receive antennas 142") connected, respectively, to one or more radio frequency (RF) transmitter (TX) modules 118 and receiver (RX) modules 128. Each transmit antenna 126 and TX module 118 may be associated with a respective transmit channel of a group of transmit channels designated herein as $TX_1$, $TX_2$, $TX_3$, ... $TX_m$, where "m" is the total number of transmit (TX) channels. Each receive antenna 142 and RX module 128 may be associated with a respective receive channel of a group of receive channels designated herein as $RX_1$, $RX_2$, $RX_3$, ... $RX_n$, where "n" is the number of receive (RX) channels. As a non-limiting example, a radar device (e.g., the radar device 102) can include individual antenna elements (e.g., antenna elements 126) connected, respectively, to four transmitter modules (e.g., the transmitter modules 118) and sixteen receiver modules (e.g., the receiver modules 128). These quantities of transmitter and receiver antenna elements and modules are intended to be illustrative and not limiting, with other quantities of these elements being possible in one or more other embodiments. In one or more embodiments, the radar device 102 may include a first number of antenna elements 126 and transmitter modules 118 and a second number of antenna elements 142 and receiver modules 128. In an illustrative, non-limiting example, the radar system may include as four transmitter modules 118 and six receiver modules 128, a single transmitter module 118 and a single receiver module 128, and so on.

The radar device 102 includes a chirp generator 116, which is configured to supply chirp input signals to the transmitter modules 118. To this end, the chirp generator 116 is configured to receive input program and control signals, including, as non-limiting examples, a reference local oscillator (LO) signal, a chirp start trigger signal, and program control signals, from the MCPU 104 via a digital-to-analog converter (DAC) 114. The chirp generator 116 is configured to generate chirp signals and send the chirp signals to the transmitter modules 118 for transmission via the transmitting antenna elements 126.

In one or more embodiments, each transmitter module 118 may include an RF conditioning module 122 that may be configured to filter the chirp signals. In one or more embodiments, the RF conditioning module 122 may include one or more frequency multipliers configured to increase the frequency of chirp signals output by the chirp generator 116. Each transmitter module 118 may include a power amplifier 124 configured to amplify the filtered chirp signal before they are provided to and transmitted via one or more corresponding transmitting antenna elements 126. Herein, the radar device 102 may periodically transmit a digital sequence of pulses *s[n]* within a coherent processing interval (CPI) including *L* pulses. Each pulse may include N chirps and each pulse may be separated from a next pulse in the sequence of pulses by a guard interval $T_G$, a brief period of time in which no pulse is being transmitted. The digital sequence of pulses may be referred to as "the radar signal" or the "transmitted signal". The RF conditioning module 122 and the power amplifier 124 of each transmitter module 118 may provide transmit beamforming functionality such that the radar signal or the transmitted signal illuminates a specific direction.

The radar signal transmitted by the transmitter modules 118 and transmit antennas 126 may be reflected by an object in an environment of the radar device 102, and part of the reflected radar signal, sometimes referred to herein as a "return signal" or a "reflection", is received by the receiving antenna elements 142 at the radar device 102. In one or more embodiments, the reflected radar signal received via one of the receiving antenna elements 142 and a corresponding one of the receiver modules 128 corresponds to a chirp signal transmitted via one of the transmit antennas 126 and a corresponding transmitter module 118, and such a received radar signal may be referred to herein as a "chirp", "chirp signal", or "received chirp signal." Such a received chirp signal may include interference components attributable to one or more interference signals in the environment of the radar system 100.

At each receiver module 128, the received (radio frequency) antenna signal is amplified by a low noise amplifier (LNA) 140 and then fed to a mixer 138 where it is mixed with the transmitted chirp signal generated by the RF conditioning module 122 to downconvert the received signal. The resulting intermediate frequency signal (downconverted RF signal) is fed to a highpass filter (HPF) 136. The resulting filtered signal is fed to a variable gain amplifier 134, which amplifies the signal before feeding it to a low pass filter (LPF) 132. This re-filtered signal is fed to an analog/digital converter (ADC) 130, which produces a digital output. Each receiver module 128 provides this digital output to the signal processor 110 of the MCPU 104 as a digital signal. In this way, the receiver modules 128 compress the object echo of various delays into multiple sinusoidal tones whose frequencies correspond to the round-trip delay of the echo.

The receiver module 128 may include a Doppler plane cancellation module 144 that may be configured to exploit known Doppler information for one or more objects in the radar environment to generate an analog signal to be canceled prior to quantization by the ADC 130. The Doppler plane cancellation module 144 may include a signal generator 146 that is configured receive prior Doppler information from the MCPU 104 or from the output of the ADC 130. The prior Doppler information may be determined from prior observations by the receiver module 128, an alternative sensor modality (such as a camera), a probabilistic model employed to determine the prior Doppler information, map data including stationary objects (such as fire hydrants, traffic lights, traffic signs, building structures, trees, and other permanent structures), other sources, or any combination thereof. The signal generator 146 may include a memory 149 to store prior Doppler information and a Doppler estimator 148 configured to generate a cancellation signal corresponding to certain objects in the radar environment. The cancellation signal may be provided to a digital-to-analog converter (DAC) 152, which may provide an analog cancellation signal to a summing node 154, which may subtract the analog cancellation signal from the filtered output signal of the low-pass filter 132. The difference signal may be provided to the ADC 130, which may produce a digital output signal that is provided to the signal processor 110 of the MCPU 104.

In one or more embodiments, the Doppler plane cancellation module 144 is a circuit that may be configured to use the prior Doppler information to cancel the signal data from the received reflected signals (echoes) corresponding to objects with known Doppler data. The resulting signal data is then converted using the ADC 130. In one or more embodiments, the Doppler plane cancellation module 144 may remove high radar cross-section (RCS) objects from the received echoes that might otherwise obscure low RCS objects, enhancing the dynamic range of the radar device 102.

In the radar system 100, the radar MCPU 104 may be connected and configured to supply input control signals to the radar device 102 and to receive therefrom digital output signals generated by the receiver modules 128. In one or more embodiments, the radar MCPU 104 includes a radar controller 108 and a signal processor 110 (sometimes referred to herein as "signal processing circuitry 110"), either or both of which may be embodied as a microcontroller unit or other processing unit. The MCPU 104, the radar controller 108, and the signal processor 110 each include or are implemented by computer processing circuitry, in accordance with various embodiments.

The radar controller 108 can receive data from the radar device 102 (e.g., from the receiver modules 128) and can control radar parameters of the radar device 102, such as frequency band, length of each radar frame, the beamforming directionality, and the like via the DAC 114. For example, the DAC 114 may be used to adjust the radar chirp signals output from the chirp generator 116 included in the radar device 102.

The signal processor 110 may be configured and arranged for signal processing tasks such as, but not limited to, object identification, interference mitigation, computation of the distance or range to an object, computation of the radial velocity of an object, and computation of the AoA of signals reflected by an object, and the like. Herein, the term "AoA" or "Angle-of-Arrival" refers to the angle of a reflected signal (e.g., a radar signal) incident on an antenna array. The signal processor 110 can provide calculated values associated with such computations to a storage 112 and/or to other systems via an interface 106.

The interface 106 can enable the MCPU 104 to communicate with other systems over local and wide area networks, the internet, automotive communication buses, and/or other kinds of wired or wireless communication systems, as non-limiting examples. In one or more embodiments, the MCPU 104 can provide the calculated values over the interface 106 to other systems, such as a radar-camera-lidar fusion system; an automated driving assistance system including parking, braking, or lane-change assistance features; and the like. The storage 112 can be used to store instructions for the MCPU 104, received data from the radar device 102, calculated values from the signal processor 110, and the like. Memory (storage) 112 can be any suitable storage medium, such as a volatile or non-volatile computer-readable memory device. In one or more embodiments, the memory 112 may include a hard disc drive, a solid-state memory device, a flash memory device, or other non-volatile memory devices.

To control the transmitter modules 118, the radar controller 108 may be configured, for example, to generate transmitter input signals, such as program signals, control trigger signals, reference local oscillator (LO) signal(s), calibration signals, frequency spectrum shaping signals (such as ramp generation in the case of Frequency-Modulated Continuous Wave (FMCW) radar), or any combination thereof. The radar controller 108 may be configured, for example, to receive data signals, sensor signals, register programming signals, or state machine signals, or any combination thereof for RF (radio frequency) circuit enablement sequences.

At each receiver module 128, digital output signals are generated (as discussed above by applying a cancellation signal based on prior Doppler information to remove known object data from object return signals) for digital processing by the signal processor 110 to construct and accumulate multiple-input multiple-output (MIMO) array vector outputs forming a MIMO aperture for use in computing plots or maps for AoA estimation and object tracks. In particular, the signal processor 110 may perform one or more interference suppression processes (e.g., which may include one or more recursive thresholding processes as described herein) on the digital output signals before processing the resultant interference-suppressed samples using one or more Fast Fourier Transform (FFT) modules or Discrete Fourier Transform (DFT) modules, such as a fast-time (range) FFT module.

Processing by these modules of the signal processor 110 generates a range chirp antenna cube (RCAC) and a slow-time (Doppler) FFT module which generates a range-Doppler antenna cube (RDAC) (e.g., including range-Doppler response maps for each RX antenna). The signal processor 110 may then perform Constant False Alarm Rate (CFAR) detection on the range-Doppler antenna cube to detect peaks in the RDAC. The signal processor 110 may further process the RDAC based on the detected peaks to construct a MIMO array vector which the signal processor 110 then processes to perform AoA estimation and object tracking. The MCPU 104 may then output the resulting object tracks (e.g., via the interface 106) to other automotive computing or user interfacing devices for further processing or display.

Conventionally, high-resolution ADCs in radars results in high power consumption at high sampling rates. To reduce such power consumptions, low-resolution ADCs may be used at the radar receiver; however, radar systems with low-resolution ADCs may suffer from low dynamic range (LDR) problems. Such problems may arise because the quantized signal is primarily determined by the analog signals of high strength, making it difficult to detect low-power analog signals. With respect to radar systems with low-resolution ADCs, the relatively high radar cross-section (RCS) objects may obscure relatively RCS objects in low-resolution receivers, compromising the radar's overall performance and reliability and posing safety risks in automotive applications.

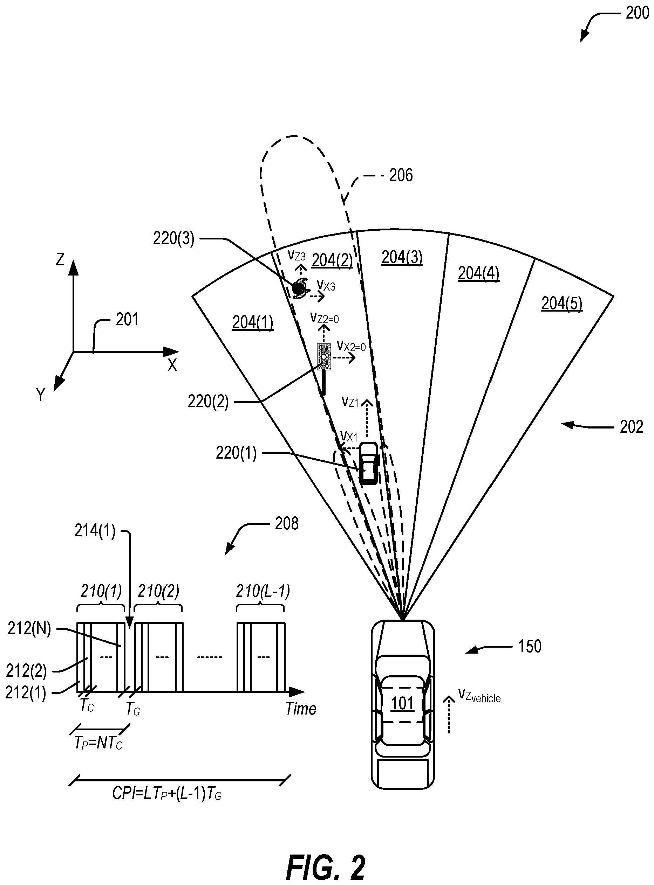

The receiver modules 128 may enable use of low-resolution ADCs while mitigating the problems associated with high RCS objects obscuring low RCS objects in the received signals. In particular, the receiver modules 128 may use the Doppler plane cancellation module 144 to leverage available Doppler information of some objects to produce an analog signal corresponding to one or more Doppler bins that may be used to cancel the received signals corresponding to one or more objects known from the Doppler information before quantization, thereby enhancing the dynamic range of the radar system as will be explained below in detail with respect to FIGs. 2-4. Embodiments of the receiver modules 128 described below may adapt the resolution of the ADCs 130 in "slow time", enabling the receiver modules 128 to resolve scale factor ambiguity in RCS object estimation with one-bit quantizers, reducing overall power consumption without sacrificing overall resolution.

In one or more embodiments, the resolution of the ADCs 130 of the receiver modules 128 may dynamically adapted. In one or more embodiments, the digital signal received from past radar measurements of the receiver modules 118 may be used to determine time-varying thresholds, analog cancellation signals, or any combination thereof at the ADCs 130 during operation (in real time or near real time). In one or more embodiments, the signal generator 146 of the Doppler plane cancellation module 144 may store a digital signal, which may be Doppler-shifted according to the prior Doppler information received at the Doppler plane cancellation module 144 before providing the Doppler-shifted digital signal to the DAC 152 to generate the analog signal to be canceled from a current analog radar signal.

FIG. 2 depicts a diagram of a system 200 including a radar device 102 configured to use transmit beamforming so that the radar device 102 illuminates a selected direction with a sequence of pulses, in accordance with certain embodiments. The radar device 102 may be implemented as part of the circuitry 101, which may be housed by the vehicle 150. The velocity of the vehicle 150 ($v_{zvehicle}$) may be known. The radar device 102 may transmit radar signals in a direction of travel of the vehicle 150. Generally, the radar signals may be transmitted toward a "view area" 202 of the radar device 102, which view area 202 may be determined based on a direction of travel of the vehicle 150. In the illustrated example, the vehicle 150 may be moving in the Z-direction, as indicate by the X-Y-Z axis 201.

The view area 202 may be divided into multiple directions or directional bins, such as a first direction 204(1), a second direction 204(2), a third direction 204(3), a fourth direction 204(4), and a fifth direction 204(5). The view area 202 may be divided into any number of directions 204. The radar device 102 may be configured to perform beamforming to focus power (transmit radar signals 206) along one direction, such as the second direction 204(2). In the illustrated example, there may be some objects 220 in the second direction, which may reflect the transmitted radar signals 206, which may be received by the antenna elements 142 and processed by the receiver modules 128.

In the illustrated example, an object 220(2) is present in the direction 204(2) that is stationary, such as a stoplight, a fire hydrant, a sign, a structure, or another stationary object, which may reflect signals in response to the transmitted radar signals 206. In the direction 204(2), there may also be an object 220(1), such as a vehicle, and an object 220(3), such as a pedestrian. Each object 220 may have a velocity vector in an X-direction and in a Z-direction (e.g., $V_{x1}$, $V_{z1}$, $V_{x2}$, $V_{z2}$, $V_{x3}$, $V_{z3}$, and so on) corresponding to the X-direction and the Z-direction of the axis 201.

Given the vehicular velocity, the radar device 102 may calculate Doppler data corresponding to the stationary object 220(2) and may calculate a cancellation signal corresponding to that Doppler data, which may be shifted based on the vehicular velocity to remove the known data corresponding to the stationary object 220(2) from the incoming radar signals at the ADC 130. Subsequently, the radar device 102 may have a higher dynamic range with respect to other objects 220(1) and 220(3) in the same direction of the radar beam.

The transmitted radar signals 206 may include periodic transmissions of an n-length digital sequence *s[n]* within a coherent processing interval (CPI) including *L* pulses 210 as shown in the timing diagram 208. Each pulse 210 includes N chirps 212. Each chirp 212 has a chirp duration $T_C$, and each pulse 210 has a time period $T_P = NT_C$. The pulses 210 are separated by a guard interval 214 having a guard interval $T_G$. The durations of the chirps 212 may be equal and may be selected to provide a selected chirp duration $T_C$. The number *N* of chirps 212 may be selected to provide the time period $T_P$

of the pulses 210. The guard interval 214 may also be selected. The combination of the time period $T_P$ of the pulses 210, the number of pulses $L$, and the guard interval $T_G$ 214 may define the CPI consisting of $L$ pulses 210, such that the CPI has a duration defined as follows:

$$CPI = LT_P + (L-1)T_G. \tag{1}$$

The radar device 102 of the circuitry 101 may form a radar beam including the sequence *s[n]* of pulses 210 and may emit the radar signals in the selected direction 204(2). The radar device 102 may transmit the same waveform (pulse 210) multiple times ($L$ times) within a CPI. The radar device 102 may receive reflected signals from the various objects 220 in the direction 204(2). The radar device 102 may divide the region (direction 204(2) into a two-dimensional grid of $R$ range bins and $D$ Doppler bins. Each range-Doppler bin has an effective radar cross-section (RCS) to be estimated. If there is no object in a range-Doppler bin, the effective RCS is zero.

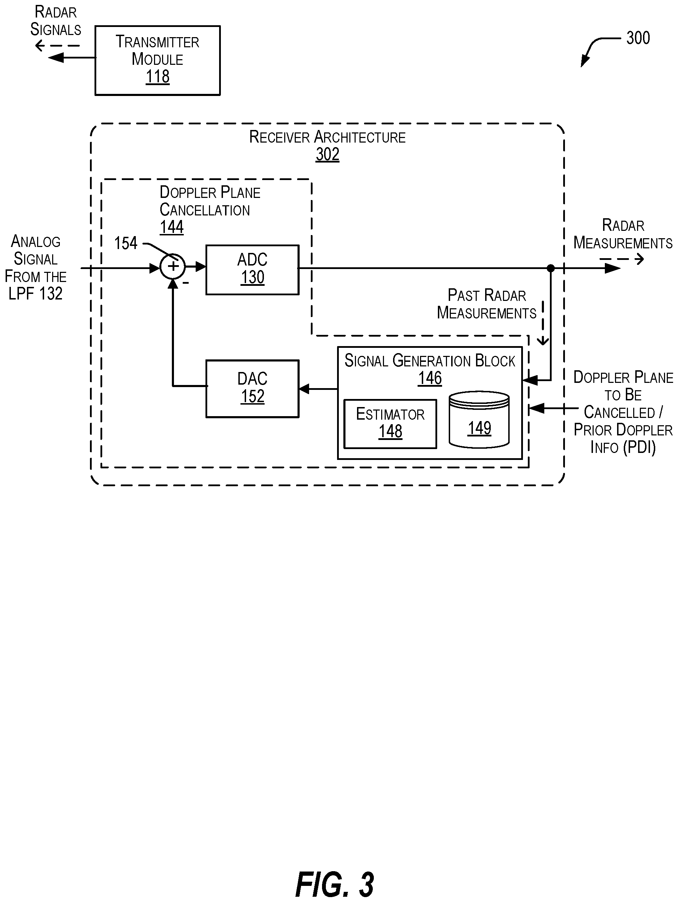

FIG. 3 depicts a simplified view of a portion 300 of a receiver module 128 of the radar device 102 of FIG. 1 configured to produce an analog cancellation signal that can be applied prior to quantization to enhance the dynamic range, in accordance with certain embodiments. In this example, the transmitter module 118 may cause the antenna elements 126 to emit radar signals toward the view area 202. The receiver module 128 may receive reflected signals (echoes) from the antenna elements 142 and may process the received signals as described with respect to FIG. 1.

In the illustrated example, the receiver architecture 302 may be part of the receiver module 128 and may receive the processed analog signal from the low pass filter 132 (in FIG. 1). The analog signal from the low pass filter 132 may be provided to a summing element 154, which may subtract an analog cancellation signal from the DAC 152 from the analog signal and may provide the resulting signal to the ADC 130. The ADC 130 may produce, based on the signal provided by the summing element 154, a digital signal including the radar measurements that were not removed or canceled by the analog cancellation signal.

As previously discussed, the Doppler plane cancellation module 144 may include a signal generation block 146 that may receive the digital radar measurements, Doppler plane to be cancelled or prior Doppler information (PDI), and optionally stored information from memory 149. The Doppler plane cancellation module 144 may use the Doppler estimator 148 to produce a digital cancellation signal corresponding to objects 220 based on known Doppler information and based on the incoming signals. The digital cancellation signal may be provided to the DAC 152, which produces an analog cancellation signal that can be provided to the summing element 154 to be subtracted from the incoming signals from the low pass filter 132.

In the illustrated example, the ADC 130 may have a resolution of $q_l$ bits, where $l$ is the slow-time slot index. The slow-time slot may be utilized to adapt the resolution of the ADCs 130 at the receiver modules 128 dynamically. The signal generation block 146 may utilize past measurement data and prior Doppler data to determine time-varying thresholds or an analog cancellation signal that may be used, at the summing node 154 at the input of the ADCs 130, to remove known Doppler information, and the known Doppler information may be Doppler-shifted according to the Doppler information before providing the data to the DAC 152 to generate the analog cancellation signal.

In a conventional low-dynamic range (LDR) system, the quantized measurements are determined using q-bit quantization. The quantized measurements of the LDR system may be determined as follows:

$$Q(\vec{Y}) = \left[ Q_{q_1}(y_1), \dots, Q_{q_L}(y_L) \right], \tag{2}$$

where $Q_q$ represents q-bit quantization of quantization bits $q_1$ through $q_L$, and $\vec{Y}$ represents the receiver measurement data within a range from $y_1$ to $y_L$ without quantization. In this LDR system, the range-Doppler data may be determined as follows:

$$\vec{Y} = [y_1, \dots, y_L] = \vec{A}\vec{\Gamma} + \vec{\eta}, \tag{3}$$

where $\vec{A}$ represents a pre-defined matrix that is known to the receiver device 102 and represents the sequences sent by the transmitter module 118 and the Doppler drift of the system. The variable $\vec{\Gamma}$ represents a matrix defined on a range-Doppler grid and its value is the radar cross-section (RCS) of the object in a particular range-Doppler cell. The LDR system already knows the pre-defined matrix $\vec{A}$ and can use any sparse data recovery or match filtering algorithm to determine the range-Doppler grid matrix $\vec{\Gamma}$, which represents estimates of the RCS values of various objects in the selected direction 204 of the transmitted radar beam 206. The variable $\vec{\eta}$ represents a complex circular Gaussian $\mathcal{CN}(0, \sigma^2)$ noise in which $\sigma^2$ represents noise variance.

The radar device 102 may be configured to perform quantization over adjusted range-Doppler bin values from which prior Doppler information has been removed or subtracted from the range-Doppler values prior to quantization of the second quantization bit $q_2$. The radar device 102 acquires measurement data from the reflected signals in a first slow-time slot yi, and uses the measurement data to calculate a cancellation signal for subsequent slow-time slots, such that the quantization measurements Q can be determined as follows:

$$Q(\widetilde{Y}) = [Q_{q_2}(\widetilde{y}_2), \dots, Q_{q_L}(\widetilde{y}_L)] \tag{4}$$

where $\widetilde{Y}$ represents the receiver measurement data after application of a cancellation signal based on the prior Doppler information for the pulse sequence $s[n]$, such that the range-Doppler grid $\widetilde{y}_i$ for each pulse 210 after the first pulse 210(1) of the sequence $s[n]$ is represented as $\widetilde{y}_2, \dots, \widetilde{y}_L$ for the CPI. The quantized range-Doppler grid estimates may be determined as follows:

$$\widetilde{Y} = [\widetilde{y}_2, \dots \widetilde{y}_L] = \widetilde{A}\vec{\Gamma} + \widetilde{\eta} \tag{5}$$

As before, $\vec{\Gamma}$ represents a matrix defined on a range-Doppler grid and its value is the radar cross-section (RCS) of the object in a particular range-Doppler cell. However, matrix $\widetilde{A}$ differs from that in Equation 3 above because the pre-defined matrix that is known to the receiver device 102 is adjusted as a function of the transmitted signal sequence as shown in Equation 7 below. The variable $\vec{\Gamma}$ may be understood to represent the RCS measurement data for each range-Doppler bin as follows:

$$\vec{\Gamma} = \left[\gamma_{1,1}, \dots, \gamma_{R,1}, \gamma_{1,2}, \dots, \gamma_{R,1}, \dots, \gamma_{1,D}, \dots, \gamma_{R,D}\right]^T, \tag{6}$$

where $\gamma_{1,1}, \dots, \gamma_{R,D}$ represent the range-Doppler bins of the two-dimensional grid or matrix, and $T$ represents the time period of one of the pulses 210. The estimated scalar may be determined as follows:

$$\widetilde{A} = \widetilde{A}_D^T \otimes S, \tag{7}$$

where the variable S is determined as follows:

$$S = [s[(n + \tau_1) \bmod N], \dots, s[(n + \tau_R) \bmod N]] \tag{8}$$

where $\tau_1, \dots, \tau_R$ represent the time slot for each pulse 210. The adjusted matrix $\widetilde{A}_D$ may be determined as follows:

$$\widetilde{A}_D = [\widetilde{a}_2, \widetilde{a}_3, \dots, \widetilde{a}_L]^T, \tag{9}$$

where $a_\ell = [e^{j2\pi v1\ell}, \dots, e^{j2\pi vD\ell}]^T$ and $\widetilde{a}_\ell = a_\ell - e^{j2\pi vd(\ell-1)} \cdot a_1$. Here, the variable $e^{j2\pi vd(\ell-1)} \cdot a_1$ may represent the analog (Doppler) cancellation signal, producing the adjusted matrix.

The radar device 102 may be configured to estimate the range $\vec{\Gamma}$ from mixed-resolution measurements of the radar channel using all the measurements from slow-time slots 2 to $L$ except the slow-time slots corresponding to the Doppler plane $v_D$ that is being used for cancellation. The first Doppler channel may be estimated using measurements from slow-time slot 1.

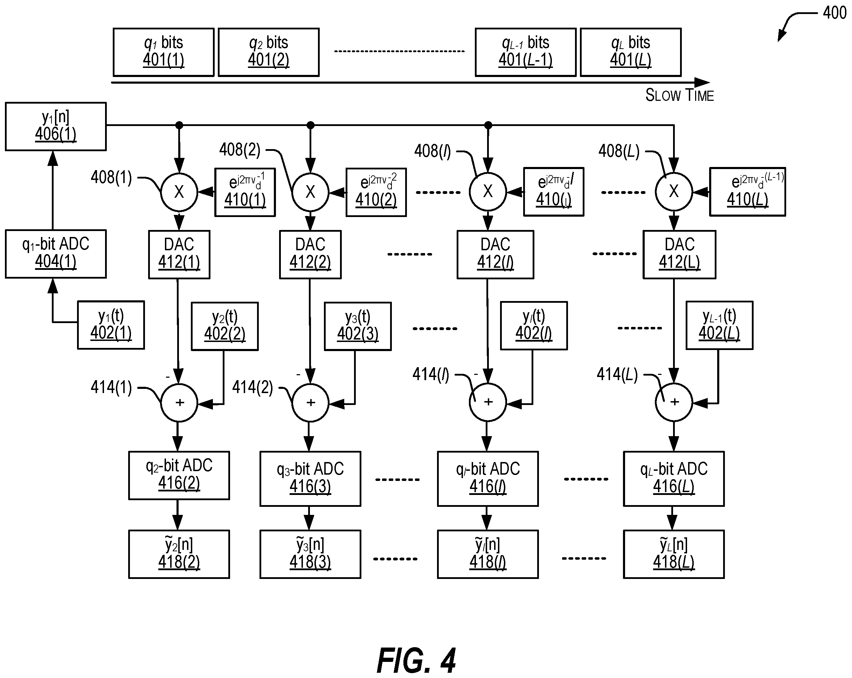

FIG. 4 depicts a diagram of a method 400 of processing received radar signals including analog-to-digital converter (ADC) resolution configured to enhance the dynamic range of the receiver module, in accordance with certain embodiments. It should be understood that the method 400 may be performed at each of the receiver modules 128 of the radar device 102 of FIG. 1.

In the illustrated example, the ADC 130 may produce a plurality of bits q corresponding to each pulse 210 of the sequence $s[n]$ of L pulses. With each pulse 210(1), 210(2), ..., 210(L-1), 210(L), the ADC 130 produces $q_1$ bits 401(1), $q_2$ bits 401(2), ..., $q_{L-1}$ bits 401 (L-1), and $q_L$ bits 401(L), respectively. The ADC 130 produces the bits q for each pulse 210 according to a slow time index in the sense that the sample rate may be in the gigahertz range such that multiple samples may be captured for each reflected signal.

An analog signal y(t) 402(1) is received and provided to a high-resolution ($q_1$-bit) ADC 404(1), which produces a $q_1$-bit quantized signal $y_1[n]$ 406(1) that can be stored in memory, such as the memory 149 in FIG. 1. In one or more embodiments, the high-resolution ADC 404(1) may have a resolution of sixteen bits (16-bit resolution). In other embodiments, the high-resolution ADC 404(1) may have a resolution of eight bits (8-bit resolution). In still other embodiments, the high-resolution ADC 404(1) may have a resolution of sixteen bits or more. The $q_1$-bit quantized signal

$y_1[n]$ 406(1) may be phase-shifted according to prior Doppler information 410 at mixers 408 to predict a signal arising from the Doppler plane to be canceled, which may be provided to the DACs 412 to produce analog cancellation signals. In one or more embodiments, the velocity of the radar device 102 is known accurately, so the Doppler data of a stationary object is also known, and the prior Doppler information corresponds to the Doppler data of the stationary object relative to the radar device 102.

The analog cancellation signals may be provided to summing nodes 414, which may subtract the cancellation signals from incoming signals 402 for each subsequent slow-time slot $y_2, ... y_L$. The difference (the subtracted analog signal) from each summing node 414 may be quantized by a one-bit ADC 416, which may produce fast-time quantized measurements $\tilde{y}_2[n], ... \tilde{y}_L[n]$ 418(2) through 418(L). The one-bit quantization may be performed for the remaining slow-time high dynamic range (HDR) signals.

After using the measurements from the slow-time measurements (quantized measurements from time slots 2 to $L$ to estimate RCS measurement data for each range-Doppler bin except the Doppler plane $v_D$ used for cancellation, the estimate is used to cancel the signal received in the first slow-time measurement. Then, the RCS measurement data may be estimated for the range-Doppler bins corresponding to the Doppler plane.

In a first stage, the radar device 102 may estimate the RCS measurement data $\vec{\Gamma}$ **for** each range-Doppler bin associated with a moving object $\hat{\Gamma}_{mov}$ including a log-likelihood maximization with log-sum penalty according to the following equation:

$$\widehat{\boldsymbol{\Gamma}}_{mov} = \min_{\vec{\Gamma}} \mathcal{L}(\vec{\Gamma}, \tilde{\sigma}^2) + \lambda \sum_{k=1}^{R \cdot D} log(|\gamma_k|^2 + \epsilon), \tag{10}$$

where $(\vec{\Gamma}, \tilde{\sigma}^2)$ is the negative log-likelihood of the quantized measurement vector, and the sparsity regularization parameter $\lambda$ is greater than zero. The radar device 102 knows the Doppler information associated with the stationary object 220(2), so the moving object information is estimated, using the optimization of Equation 10. Equation 10 is an example of an algorithm that may be used to estimate the moving object data, but other algorithms may be used to estimate the moving object data without departing from the scope of this disclosure.

Once the moving object estimates are determined, the radar device 102 may detect peaks from the estimated moving object $\hat{\Gamma}_{mov}$ using a cell-averaging constant false-alarm rate (CA-CFAR) detector to determine where the objects are in the selected direction, such that $\hat{\Gamma}_{mov}$: R × (D - 1) for the radar channel, excluding the Doppler plane $v_D$ used for cancellation.

The scale factor $\alpha$ may be determined from $\hat{\Gamma}_{mov}$ and the 16-bit quantized $y_1[n]$ according to the following equation:

$$\alpha = \min_{\alpha} \left\| \boldsymbol{y}_1 - \alpha \tilde{\boldsymbol{A}} \widehat{\boldsymbol{\Gamma}}_{mov} \right\|^2, \ \alpha \in \mathbb{R}^+. \tag{11}$$

In Equation 10, the algorithm estimates the scale factor by minimizing the square error between the prediction $\alpha \tilde{A} \hat{\Gamma}_{mov}$ and the measurement from the first slow-time slot $y_1$ (high resolution).

Then, the stationary object locations may be determined using a least mean squares approach as follows:

$$\widehat{\boldsymbol{\Gamma}}_{stat} = (\boldsymbol{S}^H \boldsymbol{S})^{-1} \boldsymbol{S}^H (\boldsymbol{y}_1 - \tilde{\boldsymbol{A}} \widehat{\boldsymbol{\Gamma}}_{mov}) \tag{12}$$

and the peaks of $\hat{\Gamma}_{stat}$ may be detected using any peak detector, such as a CA-CFAR or other peak detector. It should be understood that the least mean squares approach represents one possible technique for power scaling. In one or more embodiments, a selected power scaling algorithm may be applied, which may or may not include a least mean squares approach.

The locations of objects in the direction of the radar beam may be determined as follows:

$$\widehat{\boldsymbol{\Gamma}} = \widehat{\boldsymbol{\Gamma}}_{stat} + \widehat{\boldsymbol{\Gamma}}_{mov} \tag{13}$$

where the stationary object locations are included with the moving object locations. Thus, in Equation 10, the locations of moving objects are determined. In Equations 11-12, the location or locations of one or more stationary objects are determined, and in Equation 13, the locations of both stationary and moving objects are estimated.

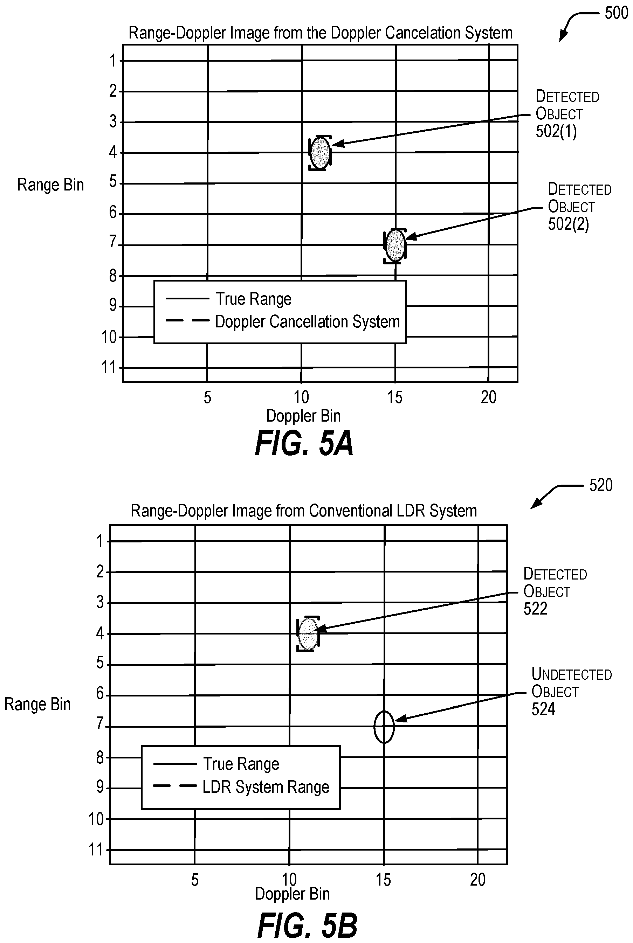

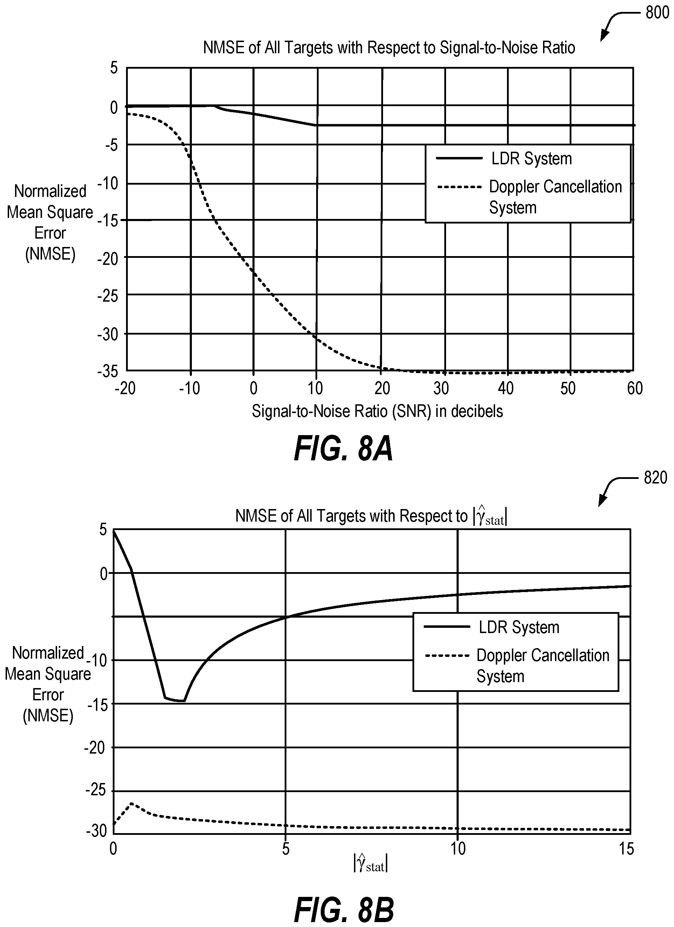

In the following discussion of FIGs. 5A-8B, a low dynamic range (LDR) system is compared to the system of FIGs. 1-4 that uses Doppler cancellation. For both systems, the carrier frequency is 80 GHz with a bandwidth of 75 MHz. The chirp duration $T_C$ is 0.13 nanoseconds (ns), the CPI is 0.2 milliseconds (ms), and the guard interval $T_G$ is 0. The signal-to-noise ratio (SNR) is 10 dB, the absolute RCS of a static object is 10 dB, the absolute RCS of a moving object is 1 dB, and the probability of false alarms is 0.0001 ($10^{-4}$). The sequence length N is 120, the number of pulses $L$ is 120, the number of range bins is 11, and the number of Doppler bins is 21.

FIG. 5A depicts a graph 500 of range bins versus Doppler bins for a true range system and the receiver module of FIGs. 1-4 with Doppler cancellation, in accordance with certain embodiments. In the illustrated example, the graph 500 may represent the range-Doppler bins in which object objects may be represented. In this example, the graph 500 includes true range-Doppler locations indicated by a solid ellipse and the shading may indicate the absolute values of the RCS determinations. In the graph 500, the detected range-Doppler locations may be indicated by a dashed rectangular block. In this example, the radar system 100 may determine a first detected object 502(1), which may be a stationary object, and a second detected object 502(2), which may be a moving object. As discussed above, the radar system 100 may be configured to use prior Doppler information to remove signal information related to stationary objects from the received radar reflections to determine one or more moving objects and then to add the RCS data of the stationary objects to determine range-Doppler data for each bin. Thus, the radar system 100 may be configured to determine high RCS objects and low RCS objects, even when the low RCS objects are in the same direction as the high RCS objects.

LDR radar systems may be unable to determine low RCS objects in the presence of higher RCS objects. An example of the range-Doppler bin data for the same objects as determined by the LDR system, which may use 1-bit quantizers without performing Doppler cancelation, is described below with respect to FIG. 5B.

FIG. 5B depicts a graph 520 of range bins versus Doppler bins for a true range system and a conventional low-dynamic range (LDR) receiver module. In this example, the LDR system may determine a detected object 522, which may be a stationary object. However, the LDR system may be unable to determine the other (moving) object, which may be represented by the undetected object 524. The undetected object 524 may be a moving object, such as a pedestrian, a cyclist, or another moving object, which the LDR system may be unable to disambiguate from the received reflections that include the stationary object, such as the detected object 522.

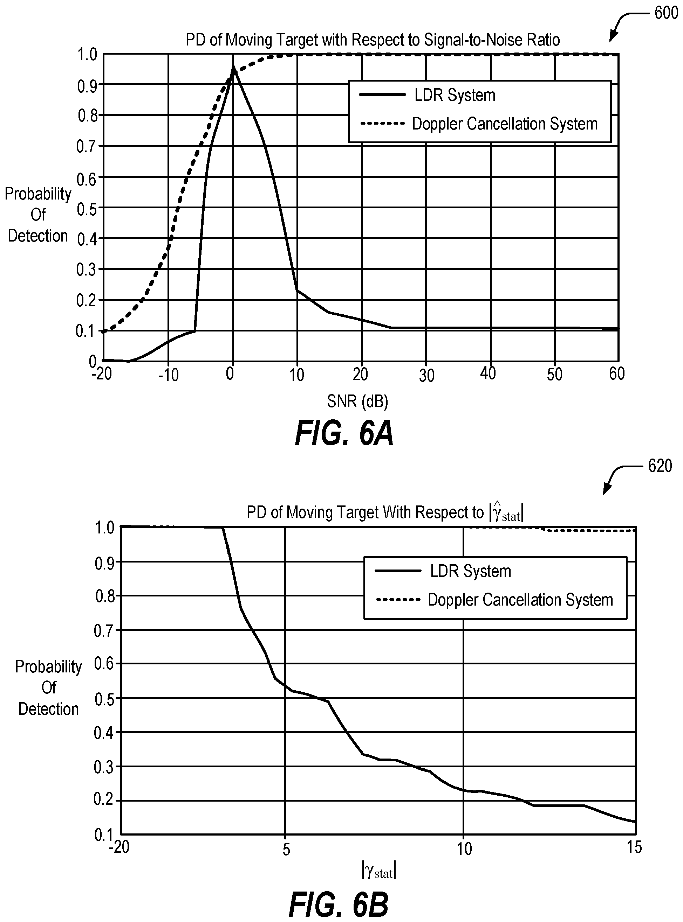

FIG. 6A depicts a graph 600 of the probability of detection for a moving object with respect to signal-to-noise ratio for a low dynamic range system and for the receiver module with Doppler cancellation of FIGs. 1-4, in accordance with certain embodiments. As shown in the graph 600, the probability of detection of the two objects quickly approaches one (100 percent) for the radar system 100 that uses Doppler cancellation. In contrast, the probability of detection of LDR system may increase rapidly and then decreases again. The decrease of the LDR system may be due to the stochastic resonance effect where at high SNR the LDR cannot determine a good estimate of the scale unquantized signal using one-bit quantizers. If more noise is added to the received signals, there may be sufficient changes (sign-flips in the quantized values) in the signal values that may enable the LDR to identify the second object. However, if the noise is low, the LDR may not be able to detect the moving object.

FIG. 6B depicts a graph 620 of the probability of detection versus an absolute radar cross-section (RCS) of a static object for a low dynamic range system and for the receiver module with Doppler cancellation of FIGs. 1-4, in accordance with certain embodiments. The probability of detection for the radar system 100 may be approximately one (100%) for the static object. The radar system 100 uses the Doppler cancellation to remove the signal data corresponding to the stationary object, allowing the one-bit quantizers to identify the moving object from the subtracted signal. In some instances, the Doppler cancellation may be imperfect, so any imperfections in the analog cancellation may be significant when the signals amplitude is stronger.

The probability of detection for the LDR system may break down for significant values of the RCS of the static object because the stationary object masks the low RCS moving object. This masking effect may be significant when the RCS of the stationary object is large.

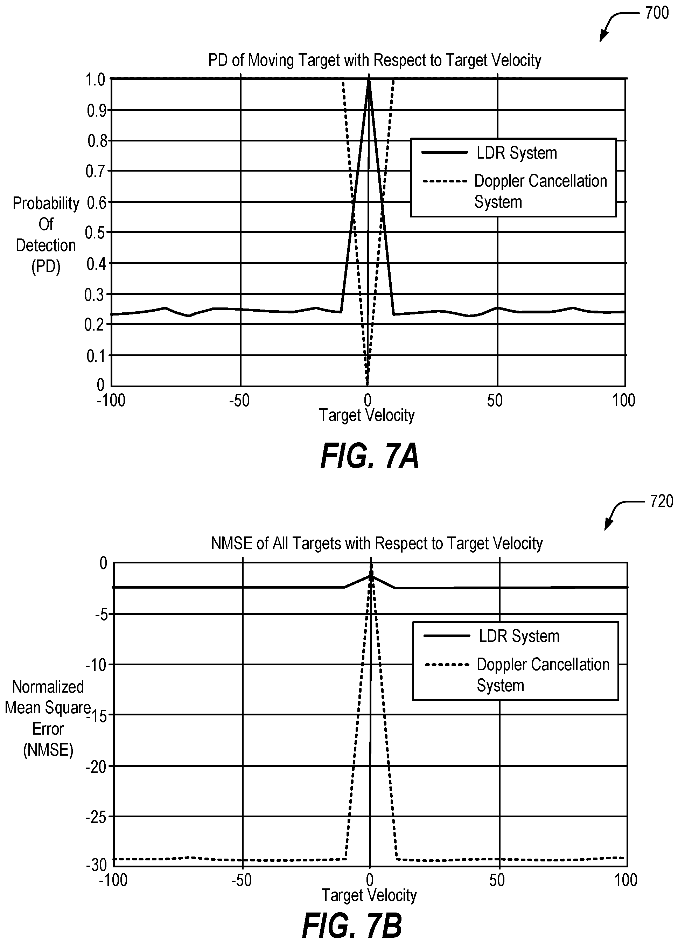

FIG. 7A depicts a graph of a graph 700 of the probability of detection versus the object velocity for a low dynamic range system and for the receiver module with Doppler cancellation of FIGs. 1-4, in accordance with certain embodiments. In this graph 700, the radar system 100 may have a high probability of detection for moving objects but may not estimate the stationary object in the first stage because the stationary objects are canceled by the Doppler cancellation signal. With respect to the LDR system, the graph 700 shows relatively low probability of detection with respect to moving objects but has a high probability of detection with respect to the stationary obj ect.

As previously mentioned, the RCS of the stationary object may render it difficult for the LDR system to detect moving objects. In contrast, the radar system 100 may determine the moving objects first, using the Doppler cancellation signal to remove signal data indicative of the stationary object, in a first processing stage.

FIG. 7B depicts a graph 720 of the normalized mean square error (NMSE) versus object velocity for a low dynamic range system and for the receiver module with Doppler cancellation of FIGs. 1-4, in accordance with certain embodiments. The graph 720 may represent the first stage of signal processing for the radar system 100 in which the moving objects are ignored and the stationary object is determined. In this example, the NMSE of the radar system 100 is significantly lower than that the LDR system for moving objects. The NMSE for the radar system 100 increases with respect to the stationary object, in the first stage of signal processing, because the radar system 100 used a Doppler cancellation signal to remove stationary object data. The NMSE of the radar system 100 is consistent with the probability of detection shown in FIG. 7A.

FIG. 8A depicts a graph 800 of the normalized mean square error (NMSE) with respect to signal-to-noise ratio (SNR) in decibels for a low dynamic range system and for the receiver module with Doppler cancellation of FIGs. 1-4, in accordance with certain embodiments. As shown in the graph 800, the radar system 100 outperforms the LDR system. The NMSE of the radar system 100 is significantly lower than that of the LDR system as the SNR increases because of the analog Doppler cancellation.

FIG. 8B depicts a graph 820 of the normalized mean square error (NMSE) versus the absolute RCS of a static object for a low dynamic range system and for the receiver module with Doppler cancellation of FIGs. 1-4, in accordance with certain embodiments. The NMSE of the radar system 100 has a non-monotonic train because of the normalization with respect to the norm of the radar channel. In this case, as NMSE decreases, the norm of the RCS static detection increases.

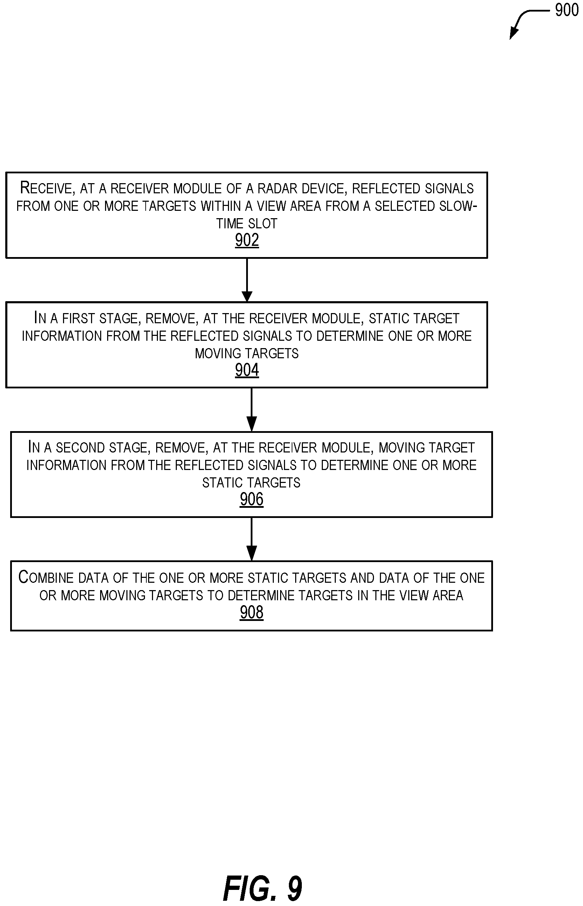

FIG. 9 depicts a flow diagram of a method of determining objects in a view area of a radar system 100, in accordance with certain embodiments. At 902, the method 900 may include receiving, at a receiver module 128 of a radar device 102, reflected signals from one or more objects within a view area from a selected slow-time slot. In one or more embodiments, the radar device 102 may include one or more transmitter modules 118 and one or more receiver modules 128. The one or more transmitter modules 118 may direct a sequence $s[n]$ of $L$ radar pulses in a selected direction within a view area of the radar device 102, and the one or more receiver modules 128 may receive reflected signals corresponding to radar pulses reflected by one or more objects (or objects) within the view area. The one or more receiver modules 128 may be configured to process a first reflected signal using a relatively high-resolution ADC 130. In one or more embodiments, the receiver modules 128 may select a first slow-time slot and may store the $q1$-bit quantized signal in memory.

At 904, in a first stage, the method 900 may include removing, at the receiver modules 128, static object information from the reflected signals to determine one or more moving objects. In one or more embodiments, the quantized signal from the first slow-time slot may be phase-shifted according to prior Doppler information to predict a signal corresponding to stationary objects. The receiver modules 118 may generate one or more cancellation signals based on the quantized signal data and the prior Doppler information to remove the static object information. The receiver modules 118 may determine the one or more moving objects by processing the resulting (subtracted) signal using a quantizer having a lower resolution.

In one or more embodiments, the ADC 130 may process the first reflected signal using a first resolution and may process subsequent signals using a second resolution that is less than the first resolution. In one or more embodiments, the first resolution may be 16-bits and the second resolution may be one-bit. In one or more embodiments, the first resolution may be 32-bits, 16-bits, or another resolution, and the second resolution may be selected to be less than the first resolution.

At 906, in a second stage, the method 900 may include removing, at the receiver modules 128, moving object information from the reflected signals to determine one or more static objects. In one or more embodiments, the receiver module 128 may estimate the range and RCS of the stationary object using the estimated moving object data and the quantized signal data from the first reflected signal.

At 908, the method 900 may include combining data of the one or more static object and data of the one or more moving objects to determine objects in the view area. The determined objects may include both static and moving objects.

The method 900 may be performed by the radar system 100 of FIG. 1 to enhance the dynamic range in detecting objects. The radar system 100 may be configured to dynamically adjust the resolution of the ADCs across slow time while providing enhanced dynamic range with reduced overall power consumption. In one or more embodiments, the constellation of digital data samples output by the receiver module 128 may vary across slow-time because the resolution of the ADCs 130 may vary across slow-time. In one or more embodiments, the power consumed by the receiver module 128 may vary across slow time, in part, because the resolutions of the ADCs 130 vary with time.

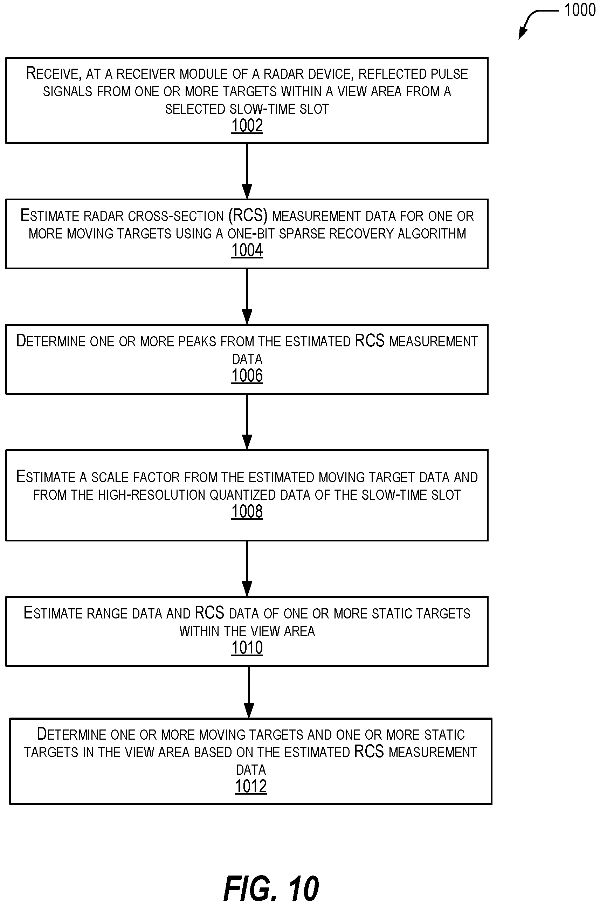

FIG. 10 depicts a flow diagram of a method 1000 of enhancing a dynamic range of a receiver using a cancellation signal based on prior Doppler information, in accordance with certain embodiments. At 1002, the method 1000 may include receiving, at a receiver module 128 of a radar device 102, reflected pulse signals from one or more objects within a view area from a selected slow-time slot. In one or more embodiments, the radar device 102 may include one or more transmitter modules 118 and one or more receiver modules 128. The one or more transmitter modules 118 may direct a sequence $s[n]$ of $L$ radar pulses in a selected direction within a view area of the radar device 102 and the one or more receiver modules 128 may receive reflected signals corresponding to radar pulses reflected by one or more objects (or objects) within the view area. The one or more receiver modules 128 may be configured to process a first reflected signal using a relatively high-resolution ADC 130. A first slow-time slot, such as $y_1[n]$ may be selected and the $q1$-bit quantized signal may be stored in memory.

At 1004, the method 1000 may include estimating RCS measurement data for one or more moving objects using a one-bit sparse recovery algorithm. In one or more examples, prior to estimating the RCS measurement data, the radar device 102 may determine prior Doppler information and may generate a Doppler cancellation signal configured to cancel signal information related to static objects within the view area.

At 1006, the method 1000 may include determining one or more peaks from the estimated RCS measurement data. In one or more embodiments, the peaks may be determined using a detector, such as a CA-CFAR detector or another peak detector.

At 1008, the method 1000 may include estimating a scale factor from the estimated moving object data and from the high-resolution quantized data of the slow-time slot $y_1[n]$. In one or more embodiments, the scale factor may be estimated as a minimum of the difference between the quantized high-resolution data and the estimated amplitude of the moving object data.

At 1010, the method 1000 may include estimating range data and RCS data of one or more static objects within the view area. As previously discussed, in the first stage, prior Doppler data is used to cancel Doppler information corresponding to static objects, leaving only data attributable to moving objects, which is used to estimate range-Doppler data for moving objects. After that is completed, the static objects are determined using the previously excluded static object Doppler information. In one or more embodiments, a peak detector may be used to determine the static object range-Doppler information.

At 1012, the method 1000 may include determining one or more moving objects and one or more static objects in the view area based on the estimated RCS measurement data. In one or more embodiments, the determined object information for the static objects and the moving objects may be used to determine all the objects in a selected direction within the view area. The process may be repeated for each direction or "sub-section" of the view area to determine the stationary and moving objects across the view area of the radar device.

In conjunction with the systems, methods, and devices described above with respect to FIGs. 1-10, a radar system is described that includes one or more transmitter modules 118 configured to transmit radar signals toward a view area and that includes one or more receiver modules 128 configured to receive reflected signals indicative of objects in the view area. To disambiguate between stationary objects (such as traffic signs, traffic signals, fire hydrants, buildings, and so on) that may have a large radar cross-section relative to one or more moving objects (such as a pedestrian, a car, and so on), the receiver module 128 may use prior Doppler information of the view area to generate a Doppler cancellation signal, which may be used to remove (cancel) stationary object information from the received reflected signals to produce filtered signals. The receiver module 128 may determine range-Doppler information for one or more moving objects within the view area from the filtered signals and then may determine range-Doppler information for stationary objects. In one or more embodiments, the Doppler cancellation signal may be applied prior to quantization, thereby enhancing the dynamic range of the radar system. The system may adapt the resolution of the ADCs 130 in slow-time and may enable the system to resolve scale factor ambiguity in RCS estimation with one-bit radars.

One or more embodiments may be further understood from the following examples.

Example 1: A radar device may include one or more receiver circuits 128 configured to receive reflected RF signals reflected by one or more objects in a view area of the radar device 102, each receiver circuit 128 includes: a mixer 138 configured to downconvert the reflected RF signals; an analog-to-digital converter (ADC) 130, configured to quantize the reflected RF signals, for a first RF signal of the reflected RF signals, the ADC is configured to quantize the first downconverted RF signal using a first resolution to produce a digital signal from a first slow-time slot of the first RF signal; a Doppler plane cancelation circuit 144 configured to generate a cancellation signal configured to cancel object information corresponding to one or more stationary or moving objects with known Doppler in the view area; and a node (154) between the mixer (138) and the ADC (130) to combine the downconverted reflected RF signals and the cancellation signal prior to quantization by the ADC; where, for subsequent RF signals of the reflected RF signals, the receiver circuit (128) is configured to: adjust the ADC (130) to have a second resolution that is less than the first resolution; and determine radar cross-section (RCS) data for one or more other moving objects within the view area using the ADC measurements at the second resolution.

Example 2: The radar device of Example 1, where each of the one or more receiver circuits 128 is configured to reduce power consumption by adjusting the ADC 130 to have the second resolution.

Example 3: The radar device of any of Examples 1 or 2, where the second resolution is one-bit.

Example 4: The radar device of Example 3, where each of the one or more receiver circuits 128 is configured to resolve a scale factor ambiguity in the RCS data for the second resolution by scaling a power level between the digital signal from the first time slot and the RCS data for a moving object of the one or more moving objects.

Example 5: The radar device of any of Examples 1-4, where the Doppler plane cancelation circuit 144 and the node 154 operate to: cancel expected returns due to the one or more other moving objects from acquired measurement data to determine second RCS data for the one or more stationary or moving objects; and combine the RCS data and the second RCS data to determine object data including data related to moving objects and stationary objects in the view area.

Example 6: The radar device of any of Examples 1-5, where the prior Doppler information is determined from one or more of a past radar measurement or a pre-determined map corresponding to a geophysical location of the radar device 102.

Example 7: The radar device of any of Examples 1-6, further including a microcontroller and processing unit 104

coupled to an output of the ADC 130 of each of the one or more receiver circuits to receive one or more of the digital signal or the RCS data; and where each of the one or more receiver circuits 128 includes: the memory is configured to store the digital signal from the first slow-time slot; and the Doppler cancellation circuit 144 is configured to: receive the prior Doppler information from one or more of the memory or the microcontroller and processing unit; and phase shift the digital signal based on the prior Doppler information to produce a Doppler cancellation signal to cancel the object information corresponding to the one or more stationary objects within the view area..

Example 8: The radar device of Example 7, where the Doppler cancellation circuit includes: a signal generator 146 configured to generate the Doppler cancellation signal; a digital-to-analog converter (DAC) 152 including an input coupled to the signal generator and an output configured to provide the Doppler cancellation signal; the node 154 including a first input to receive the subsequent downconverted RF signals, a second input coupled to the output of the DAC, an output to provide an output signal corresponding to a difference between the subsequent RF signals and the cancellation signal; and where the ADC 130 includes an input coupled to the output of the node and including a receiver circuit output coupled to the microcontroller and processing unit.

Example 9: A method of determining one or more objects in a view area of a radar system includes receiving, at one or more antennas 142 of a receiver circuit 128 of a radar device 102, reflected signals reflected by one or more objects in a view area of the receiver circuit; quantizing a first reflected signal using an analog-to-digital converter (ADC) 130 of the receiver circuit 128, the ADC 130 having a first resolution to produce a first digital signal; determining, using a Doppler plane cancellation circuit 144 of the receiver circuit 128, a cancellation signal based on prior Doppler information and the first digital signal; removing, using a node 154, reflected signals due to one or more stationary or moving objects with known Doppler information from subsequent reflected signals based on the cancellation signal; adjusting a resolution of the ADC 130 from the first resolution to a second resolution that is less than the first resolution; and quantizing, using the ADC 130, subsequent reflected signals to determine data corresponding to one or more other moving objects within the view area.

Example 10: The method of Example 9, further includes resolving a scale factor ambiguity in radar cross section (RCS) data for the second resolution by scaling a power level between the first digital signal and the data corresponding to the one or more moving objects.

Example 11: The method of any of Examples 9 or 10, further includes estimating stationary object data based on the data corresponding to the moving objects and the first digital signal; and combining the stationary object data with the data corresponding to the moving objects to determine range and radar cross-section data for each of the one or more objects in the view area.

Example 12: The method of Example 11, where estimating the stationary object data includes canceling data corresponding to the one or more moving objects from the subsequent RF signals to determine stationary object data related to one or more stationary objects in the view area.

Example 13: The method of any of Examples 9-12, where prior to determining the cancellation signal, the method comprises determining the prior Doppler information from one or more of a past radar measurement or a pre-determined map corresponding to a geophysical location of the radar device.

Example 14: The method of any of Examples 9-13, where determining the cancellation signal includes storing the first digital signal in a memory of the receiver circuit 102; receiving the prior Doppler information at a Doppler cancellation circuit 144 of the receiver circuit 128 from one or more of the memory or a microcontroller and processing unit 104; and phase shifting the digital signal based on the prior Doppler information to produce the cancellation signal to cancel the stationary object information corresponding to the one or more stationary objects within the view area and to cancel information corresponding to moving obj ects with a known Doppler within the view area.

Example 15: The method of any of Examples 9-14, where the second resolution is one-bit.

Example 16: The method of any of Examples 9-15, where the first resolution is sixteen-bits or greater.

Example 17: A radar device includes one or more receiver circuits configured to receive reflected signals reflected by one or more objects in a view area of a radar beam, each receiver circuit is configured to: for a first reflected signal of the reflected signals, quantize the first reflected signal using an analog-to-digital converter (ADC) having a first resolution to produce a digital signal from a first slow-time slot; determine a cancellation signal based on prior Doppler information and the digital signal corresponding to one or more stationary objects within the view area; apply the cancellation signal to subsequent reflected signals of the reflected signals at a summing node of the receiver circuit to remove stationary object information from the subsequent reflected signals to produce filtered signals; adjust the ADC to have a second resolution that is less than the first resolution; and quantize the filtered signals using the adjusted ADC a determine radar cross-section (RCS) data for one or more moving objects within the view area.

Example 18: The radar device of Example 17, where each of the one or more circuits is configured to reduce power consumption by adjusting the ADC to have the second resolution.

Example 19: The radar device of any of Examples 17 or 18, where: the second resolution is one-bit; and each of the one or more receiver circuits is configured to resolve a scale factor ambiguity in the RCS data for the second resolution by squaring a minimum distance between the digital signal from the first time slot and the RCS data for a moving object of the one or more moving object.

Example 20: The radar device of any of Examples 17-19, further includes a microcontroller and processing unit coupled to an output of the ADC of each of the one or more receiver circuits to receive one or more of the digital signal or the RCS data; and each of the one or more receiver circuits includes: a memory configured to store the digital signal from the first slow-time slot; a Doppler cancellation circuit configured to: receive the prior Doppler information from one or more of the memory or the microcontroller and processing unit; and phase shift the digital signal based on the prior Doppler information to produce a Doppler cancellation signal to cancel the object information corresponding to the one or more stationary objects within the view area or to cancel the object information corresponding to the one or more moving objects with a known Doppler within the view area.

The preceding detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

The foregoing description refers to elements or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

**Claims**

1. A radar device (102) comprising:
   one or more receiver circuits (128) configured to receive reflected radio frequency, RF, signals reflected by one or more objects in a view area of the radar device (102), each receiver circuit (128) comprises:

   a mixer (138) configured to downconvert the reflected RF signals;
   an analog-to-digital converter, ADC (130), configured to quantize the reflected RF signals, for a first RF signal of the reflected RF signals, the ADC is configured to quantize the first downconverted RF signal using a first resolution to produce a digital signal from a first slow-time slot of the first RF signal;
   a Doppler plane cancelation circuit (144) configured to generate a cancellation signal configured to cancel object information corresponding to one or more stationary or moving objects with known Doppler in the view area; and
   a node (154) between the mixer (138) and the ADC (130) to combine the downconverted reflected RF signals and the cancellation signal prior to quantization by the ADC;
   wherein, for subsequent RF signals of the reflected RF signals, the receiver circuit (128) is configured to:

   adjust the ADC (130) to have a second resolution that is less than the first resolution; and
   determine radar cross-section, RCS, data for one or more other moving objects within the view area using the ADC measurements at the second resolution.

2. The radar device of claim 1, wherein each of the one or more receiver circuits (128) is configured to reduce power consumption by adjusting the ADC (130) to have the second resolution.

**3.** The radar device of any of claims 1 or 2, wherein the second resolution is one-bit.

**4.** The radar device of claim 3, wherein each of the one or more receiver circuits (128) is configured to resolve a scale factor ambiguity in the RCS data for the second resolution by scaling a power level between the digital signal from the first time slot and the RCS data for a moving object of the one or more other moving objects.

**5.** The radar device of any of claims 1-4, wherein the Doppler plane cancelation circuit (144) and the node (154) operate to:
cancel expected returns due to the one or more other moving objects from acquired measurement

> data to determine second RCS data for the one or more stationary or moving objects; and combine the RCS data and the second RCS data to determine object data including data related to
> moving objects and stationary objects in the view area.

**6.** The radar device of any of claims 1-5, wherein the prior Doppler information is determined from one or more of a past radar measurement or a pre-determined map corresponding to a geophysical location of the radar device (102).

**7.** The radar device of any of claims 1-6, further comprising:

> a microcontroller and processing unit (104) coupled to an output of the ADC (130) of each of the one or more receiver circuits to receive one or more of the digital signal or the RCS data; and
> wherein each of the one or more receiver circuits (128) comprises:
>
> > the memory is configured to store the digital signal from the first slow-time slot; and
> > the Doppler cancellation circuit (144) is configured to:
> >
> > > receive the prior Doppler information from one or more of the memory or the microcontroller and processing unit; and
> > > phase shift the digital signal based on the prior Doppler information to produce a Doppler cancellation signal to cancel the object information corresponding to the one or more stationary objects within the view area.

**8.** The radar device of claim 7, wherein the Doppler cancellation circuit comprises:

> a signal generator (146) configured to generate the Doppler cancellation signal;
> a digital-to-analog converter (152), DAC, including an input coupled to the signal generator and an output configured to provide the Doppler cancellation signal;
> the node (154) including a first input to receive the subsequent downconverted RF signals, a second input coupled to the output of the DAC, an output to provide an output signal corresponding to a difference between the subsequent RF signals and the cancellation signal; and
> wherein the ADC (130) includes an input coupled to the output of the node and including a receiver circuit output coupled to the microcontroller and processing unit.

**9.** A method of determining one or more objects in a view area of a radar system, the method comprising:

> receiving, at one or more antennas (142) of a receiver circuit (128) of a radar device (102), reflected signals reflected by one or more objects in a view area of the receiver circuit;
> quantizing a first reflected signal using an analog-to-digital converter (130), ADC, of the receiver circuit (128), the ADC (130) having a first resolution to produce a first digital signal;
> determining, using a Doppler plane cancellation circuit (144) of the receiver circuit (128), a cancellation signal based on prior Doppler information and the first digital signal;
> removing, using a node (154), reflected signals due to one or more stationary or moving objects with known Doppler information from subsequent reflected signals based on the cancellation signal;
> adjusting a resolution of the ADC (130) from the first resolution to a second resolution that is less than the first resolution; and
> quantizing, using the ADC (130), subsequent reflected signals to determine data corresponding to one or more other moving objects within the view area.

10. The method of claim 9, further comprising resolving a scale factor ambiguity in radar cross-section, RCS, data for the second resolution by scaling a power level between the first digital signal and the data corresponding to the one or more other moving objects.

11. The method of any of claims 9 or 10, further comprising:

estimating stationary object data based on the data corresponding to the moving objects and the first digital signal; and

combining the stationary object data with the data corresponding to the one or more other moving objects to determine range and radar cross-section data for one or more objects in the view area.

12. The method of claim 11, wherein estimating the stationary object data comprises canceling data corresponding to the one or more other moving objects from the subsequent reflected signals to determine stationary object data related to one or more stationary objects in the view area.

13. The method of any of claims 9-12, wherein prior to determining the cancellation signal, the method comprises determining the prior Doppler information from one or more of a past radar measurement or a pre-determined map corresponding to a geophysical location of the radar device.

14. The method of any of claims 9-13, wherein determining the cancellation signal comprises:

storing the first digital signal in a memory of the receiver circuit (102);
receiving the prior Doppler information at a Doppler cancellation circuit (144) of the receiver circuit (128) from one or more of the memory or a microcontroller and processing unit (104); and
phase shifting the digital signal based on the prior Doppler information to produce the cancellation signal to cancel the stationary object information corresponding to the one or more stationary objects within the view area and to cancel information corresponding to moving objects with a known Doppler within the view area.

15. The method of any of claims 9-14, wherein the second resolution is one-bit.

**Amended claims in accordance with Rule 137(2) EPC.**

1. A radar device (102) comprising:
one or more receiver circuits (128) configured to receive reflected radio frequency, RF, signals reflected by one or more objects in a view area of the radar device (102), each receiver circuit (128) comprises:

a mixer (138) configured to downconvert the reflected RF signals;
an analog-to-digital converter, ADC (130), configured to quantize the reflected RF signals, for a first RF signal of the reflected RF signals, the ADC is configured to quantize the first downconverted RF signal using a first resolution to produce a digital signal from a first slow-time slot of the first RF signal;
a Doppler plane cancellation circuit (144) configured to generate a cancellation signal configured to cancel object information corresponding to one or more stationary or moving objects with known Doppler in the view area; and
a node (154) between the mixer (138) and the ADC (130) to combine the downconverted reflected RF signals and the cancellation signal prior to quantization by the ADC;
wherein, for subsequent RF signals of the reflected RF signals, the receiver circuit (128) is configured to:

adjust the ADC (130) to have a second resolution that is less than the first resolution; and
determine radar cross-section, RCS, data for one or more other moving objects within the view area using the ADC measurements at the second resolution.

2. The radar device of claim 1, wherein each of the one or more receiver circuits (128) is configured to reduce power consumption by adjusting the ADC (130) to have the second resolution.

3. The radar device of any of claims 1 or 2, wherein the second resolution is one-bit.

4. The radar device of claim 3, wherein each of the one or more receiver circuits (128) is configured to resolve a scale factor ambiguity in the RCS data for the second resolution by scaling a power level between the digital signal from the first time slot and the RCS data for a moving object of the one or more other moving objects.

5. The radar device of any of claims 1-4, wherein the Doppler plane cancellation circuit (144) and the node (154) operate to:
cancel expected returns due to the one or more other moving objects from acquired measurement

data to determine second RCS data for the one or more stationary or moving objects; and combine the RCS data and the second RCS data to determine object data including data related to
moving objects and stationary objects in the view area.

6. The radar device of any of claims 1-5, wherein the prior Doppler information is determined from one or more of a past radar measurement or a pre-determined map corresponding to a geophysical location of the radar device (102).

7. The radar device of any of claims 1-6, further comprising:

a microcontroller and processing unit (104) coupled to an output of the ADC (130) of each of the one or more receiver circuits to receive one or more of the digital signal or the RCS data; and
wherein each of the one or more receiver circuits (128) comprises:

the memory is configured to store the digital signal from the first slow-time slot; and
the Doppler cancellation circuit (144) is configured to:

receive the prior Doppler information from one or more of the memory or the microcontroller and processing unit; and
phase shift the digital signal based on the prior Doppler information to produce a Doppler cancellation signal to cancel the object information corresponding to the one or more stationary objects within the view area.

8. The radar device of claim 7, wherein the Doppler cancellation circuit comprises:

a signal generator (146) configured to generate the Doppler cancellation signal;
a digital-to-analog converter (152), DAC, including an input coupled to the signal generator and an output configured to provide the Doppler cancellation signal;
the node (154) including a first input to receive the subsequent downconverted RF signals, a second input coupled to the output of the DAC, an output to provide an output signal corresponding to a difference between the subsequent RF signals and the cancellation signal; and
wherein the ADC (130) includes an input coupled to the output of the node and including a receiver circuit output coupled to the microcontroller and processing unit.

9. A method of determining one or more objects in a view area of a radar system, the method comprising:

receiving, at one or more antennas (142) of a receiver circuit (128) of a radar device (102), reflected signals reflected by one or more objects in a view area of the receiver circuit;
quantizing a first reflected signal using an analog-to-digital converter (130), ADC, of the receiver circuit (128), the ADC (130) having a first resolution to produce a first digital signal;
determining, using a Doppler plane cancellation circuit (144) of the receiver circuit (128), a cancellation signal based on prior Doppler information and the first digital signal;
removing, using a node (154), reflected signals due to one or more stationary or moving objects with known Doppler information from subsequent reflected signals based on the cancellation signal;
adjusting a resolution of the ADC (130) from the first resolution to a second resolution that is less than the first resolution; and
quantizing, using the ADC (130), subsequent reflected signals to determine data corresponding to one or more other moving objects within the view area.

10. The method of claim 9, further comprising resolving a scale factor ambiguity in radar cross-section, RCS, data for the second resolution by scaling a power level between the first digital signal and the data corresponding to the one or more other moving objects.

11. The method of any of claims 9 or 10, further comprising:

estimating stationary object data based on the data corresponding to the moving objects and the first digital signal; and

combining the stationary object data with the data corresponding to the one or more other moving objects to determine range and radar cross-section data for one or more objects in the view area.

12. The method of claim 11, wherein estimating the stationary object data comprises canceling data corresponding to the one or more other moving objects from the subsequent reflected signals to determine stationary object data related to one or more stationary objects in the view area.

13. The method of any of claims 9-12, wherein prior to determining the cancellation signal, the method comprises determining the prior Doppler information from one or more of a past radar measurement or a pre-determined map corresponding to a geophysical location of the radar device.

14. The method of any of claims 9-13, wherein determining the cancellation signal comprises:

storing the first digital signal in a memory of the receiver circuit (102);
receiving the prior Doppler information at a Doppler cancellation circuit (144) of the receiver circuit (128) from one or more of the memory or a microcontroller and processing unit (104); and
phase shifting the digital signal based on the prior Doppler information to produce the cancellation signal to cancel the stationary object information corresponding to the one or more stationary objects within the view area and to cancel information corresponding to moving objects with a known Doppler within the view area.

15. The method of any of claims 9-14, wherein the second resolution is one-bit.

FIG. 1

**FIG. 2**

RADAR
SIGNALS

TRANSMITTER
MODULE
118

300

RECEIVER ARCHITECTURE
302

DOPPLER PLANE
CANCELLATION
144

ANALOG
SIGNAL
FROM THE
LPF 132

154

ADC
130

RADAR
MEASUREMENTS

PAST RADAR
MEASUREMENTS

SIGNAL GENERATION BLOCK
146

DAC
152

ESTIMATOR
148

149

DOPPLER PLANE
TO BE
CANCELLED /
PRIOR DOPPLER
INFO (PDI)

*FIG. 3*

*FIG. 4*

EP 4 764 592 A1

Range-Doppler Image from the Doppler Cancelation System

DETECTED OBJECT 502(1)

DETECTED OBJECT 502(2)

Range Bin

Doppler Bin

——— True Range
— — Doppler Cancellation System

500

**FIG. 5A**

Range-Doppler Image from Conventional LDR System

DETECTED OBJECT 522

UNDETECTED OBJECT 524

Range Bin

Doppler Bin

——— True Range
— — LDR System Range

520

**FIG. 5B**

PD of Moving Target with Respect to Signal-to-Noise Ratio

*FIG. 6A*

PD of Moving Target With Respect to $|\hat{\gamma}_{stat}|$

*FIG. 6B*

700

**PD of Moving Target with Respect to Target Velocity**

Probability Of Detection (PD)

Legend:
— LDR System
---- Doppler Cancellation System

Target Velocity

**FIG. 7A**

720

**NMSE of All Targets with Respect to Target Velocity**

Normalized Mean Square Error (NMSE)

Legend:
— LDR System
---- Doppler Cancellation System

Target Velocity

**FIG. 7B**

FIG. 8A

FIG. 8B

900

RECEIVE, AT A RECEIVER MODULE OF A RADAR DEVICE, REFLECTED SIGNALS FROM ONE OR MORE TARGETS WITHIN A VIEW AREA FROM A SELECTED SLOW-TIME SLOT
902

IN A FIRST STAGE, REMOVE, AT THE RECEIVER MODULE, STATIC TARGET INFORMATION FROM THE REFLECTED SIGNALS TO DETERMINE ONE OR MORE MOVING TARGETS
904

IN A SECOND STAGE, REMOVE, AT THE RECEIVER MODULE, MOVING TARGET INFORMATION FROM THE REFLECTED SIGNALS TO DETERMINE ONE OR MORE STATIC TARGETS
906

COMBINE DATA OF THE ONE OR MORE STATIC TARGETS AND DATA OF THE ONE OR MORE MOVING TARGETS TO DETERMINE TARGETS IN THE VIEW AREA
908

*FIG. 9*

1000

RECEIVE, AT A RECEIVER MODULE OF A RADAR DEVICE, REFLECTED PULSE SIGNALS FROM ONE OR MORE TARGETS WITHIN A VIEW AREA FROM A SELECTED SLOW-TIME SLOT
1002

ESTIMATE RADAR CROSS-SECTION (RCS) MEASUREMENT DATA FOR ONE OR MORE MOVING TARGETS USING A ONE-BIT SPARSE RECOVERY ALGORITHM
1004

DETERMINE ONE OR MORE PEAKS FROM THE ESTIMATED RCS MEASUREMENT DATA
1006

ESTIMATE A SCALE FACTOR FROM THE ESTIMATED MOVING TARGET DATA AND FROM THE HIGH-RESOLUTION QUANTIZED DATA OF THE SLOW-TIME SLOT
1008

ESTIMATE RANGE DATA AND RCS DATA OF ONE OR MORE STATIC TARGETS WITHIN THE VIEW AREA
1010

DETERMINE ONE OR MORE MOVING TARGETS AND ONE OR MORE STATIC TARGETS IN THE VIEW AREA BASED ON THE ESTIMATED RCS MEASUREMENT DATA
1012

*FIG. 10*

Europäisches
Patentamt
European
Patent Office
Office européen
des brevets

**EUROPEAN SEARCH REPORT**

Application Number

EP 24 22 2856

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/280461 A1 (KIM JONG-SOK [KR] ET AL) 7 September 2023 (2023-09-07) * figure 6B * ----- | 1-15 | INV. G01S7/285 G01S7/292 G01S13/58 |
| A | US 2016/266245 A1 (BHARADIA DINESH [US] ET AL) 15 September 2016 (2016-09-15) * figure 5 * ----- | 1-15 | ADD. G01S7/41 G01S7/03 |
| A | AURANGOZEB ET AL: "A Quad-Channel 11-bit 1-GS/s 40-mW Collaborative ADC Enabling Digital Beamforming for 5G Wireless", IEEE TRANSACTIONS ON MICROWAVE THEORY AND TECHNIQUES, IEEE, USA, vol. 67, no. 9, 1 September 2019 (2019-09-01), pages 3798-3820, XP011743631, ISSN: 0018-9480, DOI: 10.1109/TMTT.2019.2916788 [retrieved on 2019-09-03] * figure 20 * ----- | 1-15 | |

TECHNICAL FIELDS SEARCHED (IPC)

G01S

The present search report has been drawn up for all claims

| Place of search | Date of completion of the search | Examiner |
|---|---|---|
| Munich | 13 May 2025 | Heiß, Michael |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P4C01)

**EP 4 764 592 A1**

## ANNEX TO THE EUROPEAN SEARCH REPORT
## ON EUROPEAN PATENT APPLICATION NO.

EP 24 22 2856

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | | Publication date | Patent family member(s) | | Publication date |
|---|---|---|---|---|---|
| US 2023280461 | A1 | 07-09-2023 | KR 20230129793 A | | 11-09-2023 |
| | | | US 2023280461 A1 | | 07-09-2023 |
| US 2016266245 | A1 | 15-09-2016 | NONE | | |

For more details about this annex : see Official Journal of the European Patent Office, No. 12/82

EPO FORM P0459

30